# EUROPEAN PATENT APPLICATION

(11) **EP 4 844 454 A1**
(43) Date of publication of application: **25.11.2026**
(21) Application number: 25178281.9
(22) Date of filing: 22.05.2025
(51) Int. Cl.: G01V 8/10, G01D 5/26, G01H 9/00, G01L 1/24, G02F 1/125

(54) **A SENSOR DEVICE AND A METHOD FOR DETECTION OF AN ACOUSTIC SIGNAL**

(71) Applicant: Imec VZW, 3001 Leuven (BE)
(72) Inventor: HAOUARI, Rachid, 1080 Sint-Jan Molenbeek (BE); ROTTENBERG, Xavier, 3010 Kessel-Lo (BE)
(74) Representative: AWA Sweden AB

(57) **Abstract**

A sensor device (100; 200; 300) for detection of an acoustic signal is provided. The sensor device (100; 200; 300) comprises a mechanical arrangement (102; 202; 302) configured to define a resonance frequency of mechanical oscillations, wherein the mechanical arrangement (102; 202; 302) is configured to oscillate in response to the acoustic signal having a frequency corresponding to the resonance frequency. The sensor device (100; 200; 300) further comprises a sensor waveguide (110; 210; 310) configured to propagate a sensor light signal for detecting the acoustic signal, wherein the sensor waveguide (110; 210; 310) is arranged in relation to the mechanical arrangement (102; 202; 302), wherein light propagation of the sensor waveguide (110; 210; 310) is configured to be modulated by the mechanical oscillations for affecting the sensor light signal.

## Description

### Technical field

The present description relates to a sensor device and a method for detection of an acoustic signal. In particular, the present description relates to a sensor device and a method using a sensor waveguide such that the acoustic signal is transduced into an optical signal.

### Background

Photo-acoustic spectroscopy (PAS) is the measurement of the effect of absorbed light on matter, such as solids and fluids, by means of acoustic detection. In PAS, the term light refers to electromagnetic radiation of any wavelength in the optical spectrum, whether visible or not. The wavelength of light varies depending on the specific application.

The fundamental mechanism of PAS is the photo-acoustic effect, which is the formation of acoustic waves in a sample as a result of modulated light being absorbed by the sample. The modulated light leads to modulation of the light absorption in the sample. This results in heating and cooling, which lead, respectively, to expansion and contraction of the sample. Thus, acoustic waves are generated in the sample. The acoustic waves are then detected by a sensor, which transduces the detected acoustic waves into a signal allowing for analysis and quantification of certain properties of the sample, such as the concentration of certain substances.

Sensors for PAS are valuable tools in various fields, such as environmental monitoring, medical diagnostics, and industrial process control. However, the accuracy and reliability of the measurements are often limited when using traditional sound sensors, such as microphones and piezoelectric sensors.

Therefore, there is a need for improved sensors that may be used for PAS applications.

### Summary

An objective of the present description is to provide a sensor device for detection of an acoustic signal having, at the same time, high sensitivity and high frequency specificity.

This and other objectives are at least partly met by the invention as defined in the independent claims. Preferred embodiments are set out in the dependent claims.

According to a first aspect, there is provided a sensor device for detection of for detection of an acoustic signal, said sensor device comprising: a mechanical arrangement configured to define a resonance frequency of mechanical oscillations, wherein the mechanical arrangement is configured to oscillate in response to the acoustic signal having a frequency corresponding to the resonance frequency; and a sensor waveguide configured to propagate a sensor light signal for detecting the acoustic signal, wherein the sensor waveguide is arranged in relation to the mechanical arrangement, wherein light propagation of the sensor waveguide is configured to be modulated by the mechanical oscillations of the mechanical arrangement for affecting the sensor light signal for detection of the acoustic signal.

The mechanical arrangement having a resonance frequency of mechanical oscillations is sensitive to the acoustic signal having a corresponding frequency. This implies that the mechanical arrangement is configured to amplify stimulations of the acoustic signal to be detected into relatively large displacements of a structure of the mechanical arrangement.

Further, the sensor waveguide is arranged in relation to the mechanical arrangement. This implies that light propagation of the sensor waveguide is affected by the mechanical oscillations of the mechanical arrangement. Light propagation of the sensor waveguide may be very sensitive to the mechanical oscillations. Hence, the mechanical oscillations may be transduced to a modulation of the sensor light signal that is propagated in the sensor waveguide. The sensor device therefore enables detection of the acoustic signal with a high sensitivity.

It should be noted that light signals are more sensitive than electrical signals to oscillation-induced variations. In particular, a light signal, which propagates in or interacts with a space, is sensitive to deformations of that space on a scale on the order of the wavelength of the light signal. The wavelength of a light signal is smaller than the wavelength of an electrical signal. Therefore, the sensitivity of the sensor device may be improved as compared to traditional sound sensors for PAS wherein the acoustic wave produced by the photo-acoustic response is directly transduced into an electrical signal, e.g. via a piezoelectric actuator or other transducing devices.

It should be also noted that the mechanical arrangement is frequency specific, i.e. it responds more effectively to frequencies in a certain frequency range as compared to other frequencies. Thus, the mechanical arrangement makes the sensor device more frequency specific as compared to traditional sound sensors for PAS wherein the acoustic wave produced by the photo-acoustic response is received by a non-frequency specific device, such as a membrane.

The mechanical arrangement may form an acoustic resonator for defining the resonance frequency of mechanical oscillations of the mechanical arrangement.

The mechanical arrangement may have a small size allowing for a compact sensor device. The mechanical arrangement may be formed by micro-electromechanical system (MEMS) technology, which facilitates forming of small-size mechanical structures. However, the mechanical arrangement need not necessarily incorporate any electrical components.

The mechanical arrangement may be configured to have a strong quality factor (Q factor) peak at the resonance frequency, such as a Q factor larger than 10, such as a Q factor in a range of 20-1000. This implies that the mechanical arrangement may be configured to provide a strong amplification of the acoustic signal into mechanical oscillations of the mechanical arrangement.

It should be realized that the sensor waveguide may be arranged in many different ways in relation to the mechanical arrangement such that the light propagation of the sensor waveguide is affected by the mechanical oscillations of the mechanical arrangement. For instance, the sensor waveguide may be arranged in or on the mechanical arrangement. In fact, the mechanical arrangement may in its entirety be a light waveguide. This implies that the mechanical oscillations may cause a mechanical deformation of the sensor waveguide affecting light propagation of the sensor waveguide.

However, the sensor waveguide may alternatively be arranged close to the mechanical arrangement. The mechanical oscillations may thus cause a distance between the sensor waveguide and the mechanical arrangement to be changed which may impact light propagation by the sensor waveguide. This may for instance affect coupling of light between an optical component on the mechanical arrangement and the sensor waveguide so as to affect light propagation of the sensor waveguide.

It should also be realized that the sensor device may be configured to propagate the sensor light signal in two or more waveguides. Thus, the sensor waveguide may be a first sensor waveguide configured to provide coupling of the sensor light signal to a second sensor waveguide, wherein the light propagation of the first sensor waveguide may be affected so as to affect a coupling of the sensor light signal to the second sensor waveguide. In this case, one of the first sensor waveguide or the second sensor waveguide may be arranged in or on the mechanical arrangement such that the coupling of light between the first sensor waveguide and the second sensor waveguide may be affected by the mechanical oscillations.

The sensor light signal may be modulated by the mechanical oscillations. This implies that the sensor light signal may have a modulation that is varying with the frequency of the acoustic signal. This allows the acoustic signal to be detected based on detecting the modulation of the sensor light signal.

It should be realized that the sensor device may be used for detecting any acoustic signal. The acoustic signal may be caused by excitation of light causing a photo-acoustic response but may alternatively be caused by any other excitation. The sensor device is sensitive to a specific frequency of the acoustic signal due to the resonance frequency of the mechanical arrangement. This implies that the sensor device is particularly suited for detecting a photo-acoustic response. The photo-acoustic response may be controlled to a particular frequency and thus be matched to the resonance frequency of the mechanical arrangement, by controlling a modulation frequency of the excitation signal causing the photo-acoustic response.

According to an embodiment, the sensor waveguide is arranged in or integrated with the mechanical arrangement.

This implies that the mechanical oscillations may directly affect the sensor waveguide by deforming the sensor waveguide. This may provide a strong effect on light propagation by the sensor waveguide.

Thus, according to an embodiment, at least a portion of the sensor waveguide serves, at the same time, as optical waveguiding platform, for propagating the sensor light signal, and an acoustic resonator, for receiving the acoustic signal and transducing the acoustic signal into an oscillation-induced variation of the sensor light signal. This allows for sensitive detection of the acoustic signal by the sensor light signal being affected by the acoustic signal.

According to an embodiment, the mechanical arrangement is sensitive to the acoustic signal in a selective spatial location in relation to the mechanical arrangement.

The mechanical arrangement may be configured to define a resonance frequency which is spatially sensitive to an acoustic signal. For instance, the mechanical structure may include a first mechanical structure and a second mechanical structure, wherein the mechanical arrangement is sensitive to acoustic signals in locations in-between the first and the second mechanical structures. Thus, the sensor device may be sensitive to acoustic signals occurring in a well-defined spatial location.

The acoustic signal may originate from the selective spatial location in relation to the mechanical structure. For instance, the acoustic signal may be caused by excitation of light causing a photo-acoustic response in the selective spatial location. Thus, an excitation light signal may be directed to the spatial location, for causing the photo-acoustic response in the spatial location. As the mechanical arrangement may be particularly sensitive to the acoustic signal originating from the selective spatial location, the mechanical arrangement may then be very sensitive to the acoustic signal formed by the photo-acoustic response.

The sensor waveguide may be arranged in only one of the first or the second mechanical structure or may have portions arranged in each of the first and the second mechanical structures.

It should also be realized that the mechanical arrangement need not necessarily comprise a first and a second mechanical structure but may instead comprise only a single mechanical structure defining a resonance frequency.

According to an embodiment, the sensor device is configured to detect the acoustic signal being a photo-acoustic response to excitation light occurring in the spatial location causing the acoustic signal having the frequency corresponding to the resonance frequency.

The sensor device may be particularly useful for detecting a photo-acoustic response. Excitation of a photo-acoustic response provides a high signal-to-noise ratio of detecting absorption of light. The sensor device being very sensitive to the acoustic signal may therefore be advantageously used for detection of the photo-acoustic response in a very sensitive measurement.

It should be realized that detecting of photo-acoustic responses to excitation light that does not necessarily need to occur in a spatial location to which the mechanical arrangement is sensitive. Thus, in other embodiments, the mechanical arrangement need not necessarily be particularly sensitive to an acoustic signal in a selective spatial location. The sensor device may in such embodiments also be configured to detect the acoustic signal being a photo-acoustic response to excitation light.

According to an embodiment, the sensor waveguide comprises a first arm and a second arm separate from the first arm. The sensor waveguide is configured to split the sensor light signal for propagating a first portion of the sensor light signal in the first arm and for propagating a second portion of the sensor light signal in the second arm. The sensor waveguide is configured to re-combine the first portion of the sensor light signal and the second portion of the sensor light signal into a re-combined sensor light signal carrying information representing the photo-acoustic response. The mechanical arrangement comprises a first mechanical structure and a second mechanical structure. The first arm and the second arm of the sensor waveguide are configured in the first mechanical structure and the second mechanical structure, respectively. Each mechanical structure is supported only at a first end, or at the first end and at a second end of the respective mechanical structure. The first mechanical structure and the second mechanical structure define a resonance frequency of mechanical oscillations of the first mechanical structure and the second mechanical structure. The first mechanical structure and the second mechanical structure are sensitive to the acoustic signal, in the spatial location being between the first mechanical structure and the second mechanical structure. The first mechanical structure and the second mechanical structure are configured to oscillate in response to the acoustic signal for affecting the re-combined sensor light.

It should be realized that this embodiment and embodiments discussed below may be used for detecting an acoustic signal being a photo-acoustic response to excitation light but may alternatively be used for detecting any other acoustic signal.

The excitation light is hereinafter interchangeably referred to as excitation light signal.

The sensor light signal is hereinafter interchangeably referred to as input light signal.

The re-combined sensor light signal is hereinafter interchangeably referred to as output light signal.

As mentioned above, the first mechanical structure and the second mechanical structure define a resonance frequency of mechanical oscillations of the first mechanical structure and the second mechanical structure. In other terms, the first mechanical structure and the second mechanical structure jointly form an acoustic resonator having a resonance frequency.

The photo-acoustic response is induced by the interaction of the excitation light signal with a sample to be probed, such as a solid, liquid or gas, arranged at the location between the first mechanical structure and the second mechanical structure. The excitation light signal is absorbed by the sample. As a result of this light absorption, a photo-acoustic response may be induced, i.e. an acoustic signal may be excited in the sample as a result of the photo-acoustic effect.

In the absence of the photo-acoustic response and any other external force that may affect the first mechanical structure and second mechanical structure, the acoustic resonator is in an idle state. In the idle state, no mechanical oscillations are excited as a result of the photo-acoustic response or any other external force. On the contrary, when mechanical oscillations are excited as a result of the photo-acoustic response, the acoustic resonator is in a perturbed state. In the perturbed state, the mechanical oscillations affect the propagation of the first portion of the input light signal and second portion of the input light signal as compared to the idle state. As a result, the output light signal in the perturbed state differs from the output light signal in the idle state, i.e. there exists an oscillation-induced variation of the output light signal in the perturbed state relative to the idle state.

It should be realized that the first portion of the input light signal and the second portion of the input light signal may interfere to form the output light signal. The sensor is configured to cause this interference of the first and second portions of the input light signal to be affected by the photo-acoustic response changing the output light signal between the idle state and the perturbed state.

For instance, in the idle state, there may exist a recombination loss. By recombination loss it is herein meant a loss of optical power of the output light signal relative to the input light signal due to destructive interference of the first portion of the input light signal and second portion of the input light signal upon recombination of the first portion of the input light signal and second portion of the input light signal. This destructive interference is due to a phase shift of the first portion of the input light signal relative to the second portion of the input light signal when the first portion of the input light signal recombines with the second portion of the input light signal. This phase shift is due to various contributions, such as a curvature or deformation in the shape of the first arm and second arm relative to each other.

In the perturbed state, the phase shift of the first portion of the input light signal relative to the second portion of the input light signal may be changed. This may cause a change in the output light signal providing an indication of the photo-acoustic response.

Information representing the photo-acoustic response may be extracted from the output light signal in the perturbed state.

It should be realized that, with reference to the photo-acoustic effect, expressions such as acoustic wave, pressure wave and sound wave are used interchangeably. Each of these terms describes the same phenomenon, that is the propagation of mechanical energy in the sample through pressure variations as a result of the photo-acoustic effect. It should be realized that a frequency of the acoustic signal may be in an infrasonic range, an audible range, or in an ultrasonic range.

The first mechanical structure may be supported only at its first end and the second mechanical structure may be supported only at its first end. This implies that the rest of the first and the second mechanical structure are free to oscillate mechanically based on the photo-acoustic response in the location between the first and the second mechanical structures.

Alternatively, the first mechanical structure may be supported only at its first and second ends, and the second mechanical structure may be supported only at its first and second ends. This implies that the rest of the first and the second mechanical structure are free to oscillate mechanically based on the photo-acoustic response in the location between the first and the second mechanical structures.

The first mechanical structure may be spaced apart from the second mechanical structure, at least in parts which are not supported and hence free to mechanically oscillate. The first mechanical structure and the second mechanical structure are sensitive to the photo-acoustic response in a location between the spaced-apart parts of the first mechanical structure and the second mechanical structure.

The excitation light signal may be produced by a light-emitting device, such as a laser or a light-emitting diode (LED).

The excitation light signal may be external to the sensor waveguide, i.e. it may propagate separately from the sensor waveguide. In such a case, the excitation light signal propagates from the light-emitting device to the location between the first mechanical structure and the second mechanical structure without being guided by the sensor waveguide.

Alternatively, the excitation light signal may be internal, i.e. it may propagate from the light-emitting device to the location between the first mechanical structure and the second mechanical structure being guided by the sensor waveguide.

According to an embodiment, the first mechanical structure and the second mechanical structure are formed as prongs of a tuning fork.

In other terms, the tuning fork is the acoustic resonator.

In this case, the first mechanical structure and the second mechanical structure is supported only at the first end of the respective mechanical structure.

This implies that the sensor device is highly sensitive to a photo-acoustic response in a location between the prongs of the tuning fork.

According to an embodiment, a first mirror is arranged at an end of the first arm for reflecting the first portion of the sensor light signal. A second mirror is arranged at an end of the second arm for reflecting the second portion of the sensor light signal.

This implies that the input light signal is reflected back in the respective arm facilitating re-combining of the input light signals to form the output light signal.

According to an embodiment, the sensor waveguide further comprises a base portion connected to the first arm and the second arm at a junction point. The sensor waveguide is configured to propagate the sensor light signal in a first propagation direction in the base portion towards the junction point for splitting the sensor light signal in the junction point into the first portion of the sensor light signal and the second portion of the sensor light signal. The sensor waveguide is further configured to receive a reflected first portion of the sensor light signal and a reflected second portion of the sensor light signal at the junction point for forming the output light signal at the junction point and propagating the re-combined sensor light signal in a second direction in the base portion away from the junction point.

Thus, the input light signal may be fed to the arms from the base portion of the sensor waveguide. Further, the reflected first and second portions of the input light signal may be re-combined in the same base portion of the sensor waveguide.

According to an embodiment, the first end of the first mechanical structure and the first end of the second mechanical structure are connected at a first connection point. The second end of the first mechanical structure and the second end of the second mechanical structure are connected at a second connection point. The first mechanical structure is separate from the second mechanical structure between the first connection point and the second connection point.

The first mechanical structure between its first end and its second end may be free to oscillate mechanically. Similarly, the second mechanical structure between its first end and its second end may be free to oscillate mechanically. This implies that the sensor device is highly sensitive to a photo-acoustic response in a location between the spaced-apart parts of the first mechanical structure and the second mechanical structure.

The fist and the second mechanical structure may thus be configured to surround the location in which the photo-acoustic response is induced.

According to an embodiment, the sensor waveguide further comprises a base portion connected to the first arm and to the second arm at the first connection point. The sensor waveguide is configured to propagate the sensor light signal in the base portion towards the connection point for splitting the sensor light signal in the connection point into the first portion of the sensor light signal and the second portion of the sensor light signal. The sensor waveguide further comprises a sensor portion connected to the first arm and to the second arm at the second connection point. The sensor portion is configured to receive the first portion of the sensor light signal and the second portion of the sensor light signal at the second connection point for forming the re-combined sensor light signal at the second connection point and propagating the re-combined sensor light signal in the sensor portion away from the second connection point.

This implies that the input light signal may be fed to the arms by a base portion and the output light signal may be formed in a sensor portion. This implies that the input light signal and the output light signal are not propagated within a common waveguide portion, ensuring that no interference occurs between the input light signal and the output light signal.

According to an embodiment, the first mechanical structure is mechanically unbalanced in relation to the second mechanical structure.

By unbalancing the first mechanical structure and second mechanical structure, the frequency response of the acoustic resonator may be tuned so as to increase the sensitivity of the acoustic resonator to specific frequency components of the acoustic signal. Thus, at least one of the sensitivity and frequency specificity of the sensor device may be improved.

According to an embodiment, in a configuration when the first mechanical structure and the second mechanical structure are unaffected by an external force, an optical path length of the first arm is different from an optical path length of the second arm.

By designing the optical unbalance, in the idle state, of the first arm and second arm in relation to each other, the recombination loss in the idle state may be tuned.

**In** the perturbed state, there exists an oscillation-induced variation of the recombination loss relative to the idle state.

By tuning the recombination loss in the idle state, the oscillation-induced variation of the recombination loss, in the perturbed state relative to the idle state, may be increased. Thus, the sensitivity of the sensor device may be improved.

According to an embodiment, the first arm of the sensor waveguide is arranged on a first supporting structure and the second arm of the sensor waveguide is arranged on a second supporting structure.

This implies that the first mechanical structure may be formed by the first supporting structure and the first arm of the sensor waveguide, and the second mechanical structure may be formed by the second supporting structure and the second arm of the sensor waveguide. Hence, characteristics of the mechanical structures defining the resonance frequency may be controlled by properties of the first and second supporting structures, respectively.

This implies that the arms of the sensor waveguide need not be designed to ensure that a desired resonance frequency is provided. Hence, the arms of the sensor waveguide may be designed only with respect of achieving desired properties for propagation of the first and second portions of the input light signal, respectively.

According to an embodiment, the first arm of the sensor waveguide forms the first mechanical structure and the second arm of the sensor waveguide forms the second mechanical structure.

This implies that no further parts may be needed in the first and second mechanical structures, respectively. Thus, a simple configuration of the first and second mechanical structures is provided.

In this case, the first and the second arms of the sensor waveguide may be designed for setting the desired resonance frequency.

According to an embodiment, the sensor device may further comprise an excitation waveguide configured to propagate the excitation light signal and to output the excitation light signal to the spatial location. The excitation waveguide may in embodiments be configured to output the excitation light signal to the selective spatial location for which the mechanical arrangement is sensitive to acoustic signals. The excitation waveguide may be configured to output the excitation light signal to the spatial location between the first mechanical structure and the second mechanical structure.

This facilitates providing the excitation light signal at the location in which the photo-acoustic response is to be induced. By using an excitation waveguide which is separate from the sensor waveguide, any interference between the excitation light signal and the input and output light signals may be avoided.

According to an embodiment, the excitation waveguide and the sensor waveguide are integrated with each other. The excitation waveguide extends in a first plane and the sensor waveguide extends in a second plane different from the first plane. The excitation waveguide is configured to output the excitation light signal to traverse the second plane.

Integrating the excitation waveguide and the sensor waveguide may reduce the total volume occupied by the sensor device, thereby improving the miniaturization thereof.

According to an embodiment, the sensor waveguide is configured to propagate the sensor light signal and the excitation light signal. The excitation light signal has an excitation wavelength and the sensor light signal has a sensor wavelength different from the excitation wavelength. The excitation light signal is configured to cause the photo-acoustic response in the spatial location by the electromagnetic field of the excitation light signal. The excitation waveguide may in embodiments be configured to output the excitation light signal to the selective spatial location for which the mechanical arrangement is sensitive to acoustic signals. The excitation waveguide may be configured to output the excitation light signal to the spatial location between the first mechanical structure and the second mechanical structure.

Propagating both the input light signal and the excitation light signal in the sensor waveguide eliminates the need for a separately provided excitation waveguide. Thus, the total volume occupied by the sensor device may be reduced, thereby improving the miniaturization thereof.

According to an embodiment, the re-combined sensor light signal is configured to carry information representing the photo-acoustic response by a modulation in amplitude or phase of the re-combined sensor light signal.

This is a suitable manner for carrying information in the output light signal.

According to a second aspect, there is provided a method for detection of an acoustic signal, said method comprising: receiving an acoustic signal by a mechanical arrangement configured to define a resonance frequency of mechanical oscillations, wherein a frequency of the acoustic signal corresponds to the resonance frequency of the mechanical arrangement; propagating a sensor light signal in a sensor waveguide, wherein the sensor waveguide is configured in relation to the mechanical arrangement; and modulating the sensor light signal by oscillation of the mechanical arrangement in response to the acoustic signal for affecting the sensor light signal for detection of the acoustic signal.

Effects and features of this second aspect are largely analogous to those described above in connection with the first aspect. Embodiments mentioned in relation to the first aspect are largely compatible with the second aspect.

The method provides detection of the acoustic signal with high sensitivity and frequency specificity.

According to an embodiment, the method provides detection of the acoustic signal being a photo-acoustic response to excitation light.

The method may further comprise splitting the sensor light signal into a first portion of the sensor light signal propagating in a first arm of the sensor waveguide and a second portion of the sensor light signal propagating in a second arm of the sensor waveguide. The mechanical arrangement may comprise a first mechanical structure and a second mechanical structure and the first arm and the second arm of the sensor waveguide are configured in the first mechanical structure and the second mechanical structure, respectively. Each mechanical structure is supported only at a first end or at the first end and at a second end of the respective mechanical structure. The first mechanical structure and the second mechanical structure define a resonance frequency of mechanical oscillations of the first mechanical structure and the second mechanical structure. The first mechanical structure and the second mechanical structure are sensitive to the photo-acoustic response, in a location between the first mechanical structure and the second mechanical structure, causing an acoustic signal having a frequency corresponding to the resonance frequency. The first mechanical structure and the second mechanical structure are configured to oscillate in response to the acoustic signal for affecting a re-combined sensor light signal. The modulating further comprises: modulating the first portion of the sensor light signal in the first arm and the second portion of the sensor light signal in the second arm by oscillation of the first mechanical structure and the second mechanical structure. The method further comprises re-combining the first portion of the sensor light signal and the second portion of the sensor light signal into the re-combined sensor light signal carrying information representing the photo-acoustic response.

### Brief description of the drawings

The above, as well as additional objects, features, and advantages of the present description, will be better understood through the following illustrative and non-limiting detailed description, with reference to the appended drawings. In the drawings, like reference numerals will be used for like elements, unless stated otherwise.
Fig. 1 is a schematic view of a sensor device according to an embodiment.
Figs 2a-e are schematic views of different embodiments of the sensor device illustrating modulation of light propagation of a sensor waveguide.
Fig. 3a is a schematic view of a sensor, according to a first embodiment, for detection of a photo-acoustic response to an excitation light signal.
Figs 3b-3c are schematic views of the sensor according to versions of a second embodiment.
Fig. 4 is a schematic view of the sensor according to an embodiment similar to that in Fig. 3a.
Fig. 5 is a schematic view of the sensor according to an embodiment similar to that in Fig. 3a.
Fig. 6 is a schematic view of the sensor according to an embodiment similar to that in Fig. 3a.
Fig. 7 illustrates a method for detection of a photo-acoustic response to an excitation light signal.

### Detailed description

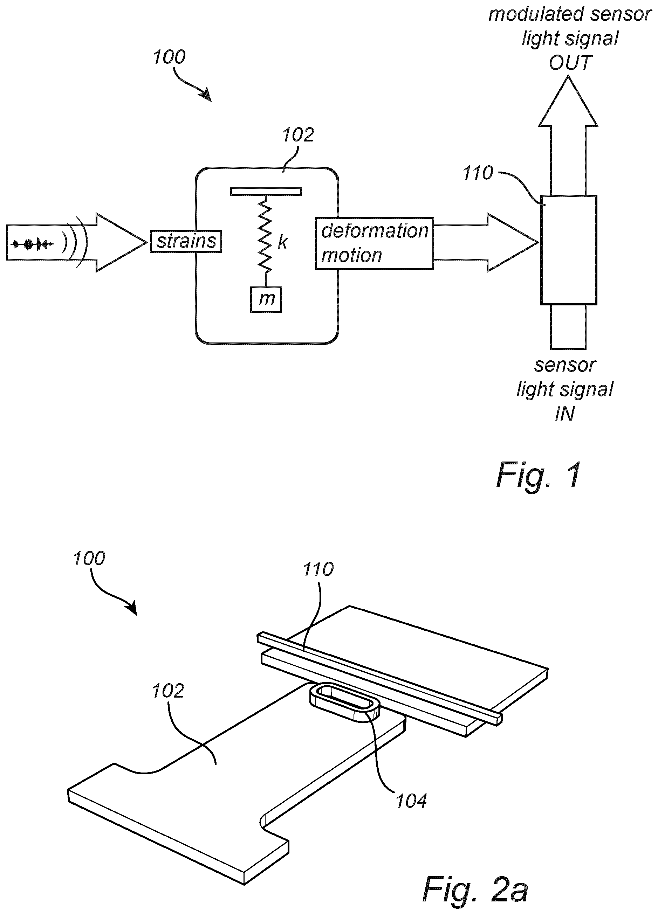

Referring now to Fig. 1, a sensor device 100 will be generally described.

The sensor device 100 is configured to detect an acoustic signal. The sensor device 100 is adapted to detect an acoustic signal with high frequency specificity. Thus, the acoustic signal may have a frequency corresponding to the frequency specificity of the sensor device 100. The acoustic signal may for instance be a photo-acoustic response having a frequency corresponding to a modulation frequency of excitation light. In this respect, the frequency of the acoustic signal may be controlled and the sensor device 100 may be configured to detect the acoustic signal with high sensitivity.

The sensor device 100 comprises a mechanical arrangement 102. The mechanical arrangement 102 may have a resonant structure forming an acoustic resonator. The mechanical arrangement 102 is configured to define a resonance frequency of mechanical oscillations.

The mechanical arrangement 102 may be configured to receive the acoustic signal. Thus, the mechanical arrangement 102 may be configured to face a direction from which an acoustic signal is to be received.

The acoustic signal forms a pressure wave which may act on the mechanical arrangement 102 forcing mechanical oscillations by the mechanical arrangement 102. The acoustic signal having a frequency corresponding to the resonance frequency of the mechanical arrangement 102 may thus induce mechanical oscillations at the resonance frequency. This implies that the mechanical arrangement 102 may amplify stimulation of the acoustic signal such that relatively large displacements of the mechanical arrangement 102 may be induced by the acoustic signal.

The sensor device 100 further comprises a sensor waveguide 110. The sensor waveguide 110 may form part of a photonic circuit. The sensor waveguide 110 may be arranged in relation to the mechanical arrangement 102 such that the mechanical oscillations of the mechanical arrangement 102 may be sensed using a sensor light signal that is propagated in the sensor waveguide 110.

Thus, the sensor device 100 may be configured to propagate a sensor light signal through the sensor waveguide 110. The mechanical arrangement 102 may be configured to affect light propagation in the sensor waveguide 110 such that the sensor light signal is affected. The sensor light signal may then be detected to detect an effect on the sensor light signal caused by the mechanical oscillations of the mechanical arrangement 102.

The sensor light signal may be very sensitive to changes in the light propagation of the sensor waveguide 110. Thus, the sensor device 100 may be configured to provide high sensitivity in detecting the acoustic signal by inducing mechanical oscillations of the mechanical arrangement 102 by the acoustic signal and further detecting an effect on the sensor light signal caused by the mechanical oscillations.

The mechanical arrangement 102 and the sensor waveguide 110 may be arranged in many different manners in relation to each other for causing light propagation of the sensor waveguide 110 to be modulated by the mechanical oscillations of the mechanical arrangement 102.

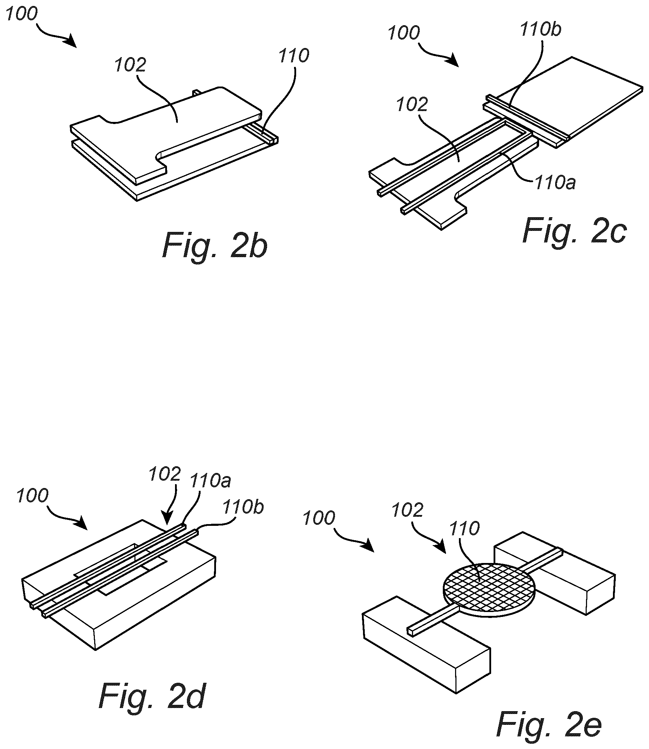

Referring now to Figs 2a-e, different embodiments for providing modulation of the light propagation of the sensor waveguide 110 by the mechanical oscillations of the mechanical arrangement 102 will be described.

As shown in Fig. 2a, the mechanical arrangement 102 may comprise a cantilever structure. The sensor waveguide 110 may be arranged on a fixed structure which is arranged close to a free end of the cantilever structure. Further, the cantilever structure may be provided with a waveguide 104 forming a loop. In an idle position of the cantilever structure, i.e., when the cantilever structure is not affected by an acoustic signal and no mechanical oscillations are excited, the sensor waveguide 110 and the loop-shaped waveguide 104 are arranged in a common plane with the sensor waveguide 110 being displaced in the common plane from the loop-shaped waveguide 104.

The loop-shaped waveguide 104 may be dimensioned such that, in the idle state, the sensor light signal is prevented from propagating in the sensor waveguide 110 past the loop-shaped waveguide 104. The loop-shaped waveguide 104 and the sensor waveguide 110 may be dimensioned to form a light resonating circuit for a wavelength of the sensor light signal such that, in the idle state of the cantilever structure, propagation of light through the sensor waveguide 110 is prevented.

When the cantilever structure moves due to mechanical oscillations being induced by the acoustic signal, a coupling of the loop-shaped waveguide 104 to the sensor waveguide 110 may be weakened, allowing light to propagate through the sensor waveguide 110 past the loop-shaped waveguide 104. Thus, a photodetector configured to detect the sensor light signal being propagated through the sensor waveguide 110 may be configured to detect the sensor light signal as a representation of the acoustic signal.

Fig. 2b illustrates another embodiment, wherein the mechanical arrangement 102 comprises a cantilever structure. The sensor waveguide 110 may be arranged on a fixed structure which is arranged close to a free end of the cantilever structure. The sensor waveguide 110 may extend in a plane parallel to an extension of the cantilever structure.

When the cantilever structure moves due to mechanical oscillations being induced by the acoustic signal, the free end of the cantilever structure may be moved so as to vary a distance between the sensor waveguide 110 and the free end of the cantilever structure. The light propagation in the sensor waveguide 110 may be affected by the distance between the sensor waveguide 110 and the cantilever structure. This is due to a physical surrounding to the sensor waveguide 110 defining a light mode that is allowed to propagate in the sensor waveguide 110.

Fig. 2c illustrates another embodiment, wherein the mechanical arrangement 102 comprises a cantilever structure. The sensor waveguide 110 comprises a first sensor waveguide 110a extending in or on the cantilever structure and a second sensor waveguide 110b which may be arranged on a fixed structure which is arranged close to a free end of the cantilever structure. In an idle position of the cantilever structure, the first sensor waveguide 110a and the second sensor waveguide 110b are arranged in a common plane with the second sensor waveguide 110b being displaced in the common plane from the first sensor waveguide 110a.

The sensor light signal may be input to either the first sensor waveguide 110a or the second sensor waveguide 110b. For instance, the sensor light signal may be input to the first sensor waveguide 110a. The sensor light signal may further be coupled from one sensor waveguide to the other sensor waveguide, e.g., from the first sensor waveguide 110a to the second sensor waveguide 110b.

When the cantilever structure moves due to mechanical oscillations being induced by the acoustic signal, a coupling between the first sensor waveguide 110a and the second sensor waveguide 110b may be changed, affecting light propagation between the first and second sensor waveguides. A strength of coupling between the first and second sensor waveguides 110a, 110b, is a function of a distance between the first and second sensor waveguides 110a, 110b and hence is affected by the mechanical oscillations of the cantilever structure.

Fig. 2d illustrates another embodiment, wherein the mechanical arrangement 102 is configured to provide two suspended sensor waveguides 110a, 110b. Thus, the sensor waveguide comprises a first sensor waveguide 110a and a second sensor waveguide 110b. The first and second sensor waveguides 110a, 110b with the first and the second sensor waveguides 110a, 110b being supported at a first end and at a second end, respectively. The first and the second sensor waveguides 110a, 110b are configured to provide mechanical oscillations between the first and second ends, respectively, defining a resonance frequency.

The first sensor waveguide 110a may be arranged close to the second waveguide 110b and may for example, as shown in Fig. 2d, extend in parallel with the second waveguide 110b.

The sensor light signal may be input to either the first sensor waveguide 110a or the second sensor waveguide 110b. For instance, the sensor light signal may be input to the first sensor waveguide 110a. The sensor light signal may further be coupled from one sensor waveguide to the other sensor waveguide, e.g., from the first sensor waveguide 110a to the second sensor waveguide 110b.

When the sensor waveguides 110a, 110b move due to mechanical oscillations being induced by the acoustic signal, a coupling between the first sensor waveguide 110a and the second sensor waveguide 110b may be changed, affecting light propagation between the first and second sensor waveguides. A strength of coupling between the first and second sensor waveguides 110a, 110b, is a function of a distance between the first and second sensor waveguides 110a, 110b and hence is affected by the mechanical oscillations.

Fig. 2d illustrates another embodiment, wherein the mechanical arrangement 102 is configured to provide a suspended phononic crystal structure that is supported at a first end and a second end, respectively. The phononic crystal may form a sensor waveguide 110. The mechanical arrangement between the first end and the second end defines a resonance frequency of mechanical oscillations.

In an idle position of the phononic crystal, i.e., when the phononic crystal structure is not affected by an acoustic signal and no mechanical oscillations are excited, the sensor light signal may be allowed to pass light from the first end to the second end.

When the phononic crystal structure moves due to mechanical oscillations being induced by the acoustic signal, the phononic crystal structure may undergo deformations. For instance, relative distances of holes in the phononic crystal structure may be changed. These relative distances of the holes in the phononic crystal structure impact interference of a light pattern inside the phononic crystal structure. This provides a modulation of light propagation through the phononic crystal structure so as to modulate an amplitude of output light.

As described above, the mechanical arrangement 102 and the sensor waveguide 110 may be arranged in many different manners for allowing light propagation of the sensor waveguide to be modulated by mechanical oscillations of the mechanical arrangement 102.

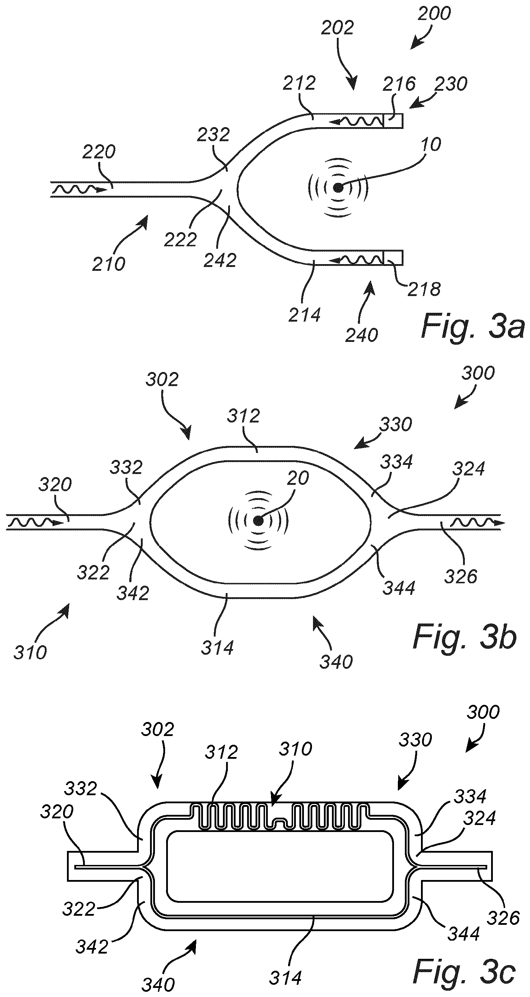

Referring now to Fig. 3a and Fig. 3b, a sensor device 100, 200 according to a first embodiment and second embodiment, respectively, will be described in detail. The first embodiment and second embodiment are similar in many respects, as further illustrated below. Unless otherwise specified, in the following Fig. 3a and Fig. 3b will be referred to collectively.

The sensor device 200, 300 is for detection of a photo-acoustic response to an excitation light signal. The sensor device 200, 300 comprises a sensor waveguide 210, 310 configured to propagate a sensor light signal, hereinafter referred to as input light signal. The sensor waveguide 210, 310 comprises a first arm 212, 312 and a second arm 214, 314, the second arm 214, 314 being separate from the first arm 212, 312. The sensor waveguide 210, 310 is configured to split the input light signal into a first portion and a second portion. The first portion of the input light signal propagates in the first arm 212, 312. The second portion of the input light signal propagates in the second arm 214, 314.

In other terms, the first arm 212, 312 and second arm 214, 314 serve as a respective optical waveguide for the first portion of the input light signal and second portion of the input light signal. The first arm 212, 312 may be designed to guide a single optical mode. In such a case, the first portion of the input light signal is the optical mode that may be guided by the first arm 212, 312. The second arm 214, 314 may be designed to guide a single optical mode. In such a case, the second portion of the input light signal is the optical mode that may be guided by the second arm 214, 314.

The sensor waveguide 210, 310 is configured to re-combine the first portion of the input light signal and the second portion of the input light signal into a re-combined sensor light signal carrying information representing the photo-acoustic response. The re-combined sensor light signal is hereinafter referred to as output light signal.

The first arm 212, 312 and the second arm 214, 314 of the sensor waveguide 210, 310 are configured in a mechanical arrangement 202, 302 comprising a first mechanical structure 230, 330 and a second mechanical structure 240, 340, respectively.

In the first embodiment, as shown in Fig. 3a, the first mechanical structure 230 is supported only at a first end 232 of the first mechanical structure 230. Likewise, the second mechanical structure 240 is supported only at a first end 242 of the second mechanical structure 240.

In the second embodiment, as shown in Fig. 3b, the first mechanical structure 330 is supported at a first end 332 of the first mechanical structure 330 and at a second end 334 of the first mechanical structure 330. Likewise, the second mechanical structure 340 is supported at a first end 342 of the second mechanical structure 340 and at a second end 344 of the second mechanical structure 340.

Collectively referring back to Fig. 3a and Fig. 3b, the first mechanical structure 230, 330 and the second mechanical structure 240, 340 define a resonance frequency of mechanical oscillations of the first mechanical structure 230, 330 and the second mechanical structure 240, 340. In other terms, the first mechanical structure 230, 330 and the second mechanical structure 240, 340 jointly form an acoustic resonator having a resonance frequency.

The first mechanical structure 230, 330 and the second mechanical structure 240, 340 are sensitive to the photo-acoustic response in a location 10, 20, between the first mechanical structure 230, 330 and the second mechanical structure 240, 340, when the photo-acoustic response causes an acoustic signal having a frequency corresponding to the resonance frequency of the acoustic resonator. The first mechanical structure 230, 330 and the second mechanical structure 240, 340 are configured to oscillate in response to the acoustic signal for affecting the output light signal.

In other terms, a sample to be probed, such as a solid, liquid or gas, is arranged at the location 10, 20 between the first mechanical structure 230, 330 and the second mechanical structure 240, 340. The excitation light signal is absorbed by the sample. As a result of this light absorption, a photo-acoustic response may be induced, i.e., an acoustic signal may be excited in the sample as a result of the photo-acoustic effect, as further discussed later. When excited, the acoustic signal propagates from the location 10 to the surroundings, including the acoustic resonator formed by the first mechanical structure 230, 330 and second mechanical structure 240, 340. When the frequency of the acoustic signal corresponds to the resonance frequency of the acoustic resonator, mechanical oscillations may be effectively excited in each mechanical structure 230, 240, as further discussed later.

In the absence of the photo-acoustic response and any other external force that may affect the first mechanical structure 230, 330 and second mechanical structure 240, 340, the acoustic resonator is in an idle state. In the idle state, no mechanical oscillations are excited as a result of the photo-acoustic response or any other external force. On the contrary, when mechanical oscillations are excited as a result of the photo-acoustic response, the acoustic resonator is in a perturbed state. In the perturbed state, the mechanical oscillations affect the propagation of the first portion of the input light signal and second portion of the input light signal as compared to the idle state. As a result, the output light signal in the perturbed state differs from the output light signal in the idle state.

It should be realized that the optical power of the output light signal, irrespective of the state of the acoustic resonator, is smaller than the optical power of the input light signal. In other words, the output light signal has an optical power drop relative to the input light signal.

In the idle state, in addition to the recombination loss described above, there exists a propagation loss.

In the idle state, the first portion of the input light signal in the first arm 212, 312 and the second portion of the input light signal in the second arm 214, 314 experience a propagation loss in the first arm 212, 312 and second arm 214, 314, respectively. This respective propagation loss may comprise various contributions, such as absorption, scattering, nonlinear frequency conversion, and bend losses. Each of these contributions is influenced, to a respective extent, by the shape of the respective arm where the first portion of the input light signal and second portion of the input light signal is being propagated.

Bend losses in the first arm 212, 312 and second arm 214, 314 are due to a curvature or deformation in the shape of the first arm 212, 312 and second arm 214, 314, respectively, relative to the shape of the portion of the sensor waveguide 210, 310 where the input light signal is propagated before being split in the first portion of the input light signal and second portion of the input light signal. A curvature or deformation in the shape of the first arm 212, 312 leads to coupling of the first portion of the input light signal to radiation modes of the first arm 212, 312, which results in a loss of the optical power of the first portion of the input light signal in the first arm 212, 312. Likewise, a curvature or deformation in the shape of the second arm 214, 314 leads to coupling of the second portion of the input light signal to radiation modes of the second arm 214, 314, which results in a loss of the optical power of the second portion of the input light signal in the second arm 214, 314.

**In** the idle state, due to the propagation loss and recombination loss described above, the output light signal has an optical power drop relative to the input light signal.

**In** addition, in the idle state, the output light signal may have a phase shift relative to the input light signal. This phase shift may be due to various contributions, such as a curvature or deformation in the shape of the first arm 212, 312 and second arm 214, 314 relative to each other.

**In** the perturbed state, the mechanical oscillations induced by the photo-acoustic response curve or deform the shape of the first arm 212, 312 and second arm 214, 314 relative to the idle state. As result, there exists an oscillation-induced variation, relative to the idle state, of the propagation loss and recombination loss described above. This variation ultimately results in an oscillation-induced variation of the optical power drop of the output light signal relative to the input light signal.

In addition, in the perturbed state, there may be an oscillation-induced variation, as compared to the idle state, of the phase shift of the output light signal relative to the input light signal. This oscillation-induced variation may be due to an oscillation-induced curvature or deformation in the shape of the first arm 212, 312 and second arm 214, 314 relative to each other.

Information representing the photo-acoustic response may be extracted from the output light signal in the perturbed state, as further discussed later.

It should be realized that at least a portion of the sensor waveguide 210, 310 serves, at the same time, as optical waveguiding platform, for propagating the input light signal and output light signal, and acoustic resonator, for receiving the acoustic signal and transducing the photo-acoustic response into an oscillation-induced variation of the output light signal.

It should be noted that light signals are more sensitive than electrical signals to oscillation-induced variations. In particular, a light signal, which propagates in or interacts with a space, is sensitive to deformations of that space on a scale on the order of the wavelength of the light signal. The wavelength of a light signal is smaller than the wavelength of an electrical signal. Therefore, the sensitivity of the sensor device 200, 300 may be improved as compared to traditional sound sensors for PAS wherein the acoustic signal produced by the photo-acoustic response is directly transduced into an electrical signal, e.g., via a piezoelectric actuator or other transducing devices.

It should be also noted that the acoustic resonator is frequency specific, i.e., it responds more effectively to frequencies in a certain frequency range as compared to other frequencies, as further illustrated later. Thus, the acoustic resonator makes the sensor device 200, 300 more frequency specific as compared to traditional sound sensors for PAS wherein the acoustic signal produced by the photo-acoustic response is received by a non-frequency specific device, such as a membrane.

In the following, further details will be provided concerning the excitation and propagation of the acoustic signal in the sample as a result of the photo-acoustic effect.

As result of the interaction of the excitation light signal with the sample at the location 10, 20, optical energy is absorbed by the sample from the excitation light signal. Due to this light absorption, the sample releases energy in the form of heat through non-radiative relaxation processes. In order for an acoustic signal to be excited, the excitation light signal needs to be modulated such that the interaction of the excitation light signal with the sample results in a modulation of the optical energy absorbed by the sample, i.e., a modulation of the light absorption in the sample. Thus, the modulation of the light absorption results in a modulation of the heat dissipation in the sample. As a result, the temperature of the sample is modulated. An increase of the temperature leads to an expansion of the sample. Likewise, a decrease of the temperature leads to a contraction of the sample. The expansion and contraction of the sample ultimately result in an acoustic signal, i.e., a pressure wave, being excited in the sample. Once excited, the acoustic signal propagates through the sample.

It should be realized that the excitation light signal is preferably modulated temporally, i.e., by varying over time the intensity, phase or wavelength of the excitation light signal. By intensity of the excitation light signal it is herein meant the power per unit area of the excitation light signal that is incident on the sample. Preferably, a temporal modulation of the excitation light signal is periodic, i.e., it consists in varying over time, at a modulation frequency, the intensity, phase or wavelength of the excitation light signal. However, spatial modulation of the excitation light signal is also conceivable, e.g., for photo-acoustic imaging applications.

It should be realized that the optical properties of the sample influence the photo-acoustic response. For instance, the absorption coefficient of the material of the sample, which depends on the wavelength of the excitation light signal, determines how much light is absorbed. Materials with higher absorption coefficients may generate acoustic signals, as a result of the photo-acoustic effect, with higher intensities. Therefore, the wavelength of the excitation light signal may be chosen based on the optical properties of the sample, such as the absorption coefficient, in order to increase the strength of the photo-acoustic response.

Likewise, the thermal properties of the sample, such as the thermal conductivity and specific heat capacity, also influence the photo-acoustic response. The thermal conductivity quantifies the rate at which heat energy passes through a material due to a temperature gradient. In materials with lower thermal conductivity, the heat dissipated in the sample as a result of the photo-acoustic effect may accumulate around the area where the excitation light signal is incident on the sample. As a result of this heat accumulation, acoustic signals with higher intensity are generated. The specific heat capacity quantifies the amount of heat required to change the temperature of a unit mass of the sample. A lower specific heat capacity means that a given amount of absorbed light energy results in a larger temperature increase, leading to a more pronounced thermal expansion. Thus, materials with a lower specific heat capacity may generate acoustic signals, as a result of the photo-acoustic effect, with higher intensities.

The acoustic signal generated in the sample as a result of the photo-acoustic effect has a frequency spectrum. The frequency spectrum depends on the modulation of the excitation light signal and the interaction of the excitation light signal with the sample. The frequency spectrum may have multiple frequency components. When the excitation light signal is temporally modulated at a modulation frequency, the acoustic signal generated as a result of the photo-acoustic effect may have a major frequency component at the modulation frequency. In other terms, the frequency component with the largest amplitude may be at the modulation frequency. When the frequency spectrum contains additional frequency components, these additional frequency components are concentrated around the major frequency component within a frequency range the extent of which is much smaller than a value of the major frequency component itself.

It should be realized that the propagation of the acoustic signal in the sample is also influenced by the acoustic properties of the sample, such as the acoustic impedance and acoustic attenuation.

The acoustic attenuation of the sample describes the rate at which the energy of the acoustic signal decreases as the acoustic signal propagates through the sample. Thus, the higher the acoustic attenuation of the sample, the lower the intensity of the acoustic signal when it reaches the acoustic resonator. Likewise, the larger the distance between the location 10, 20 and a portion of the acoustic resonator, the lower the intensity of the acoustic signal when it reaches that portion of the acoustic resonator. Therefore, designing the acoustic resonator such that a distance between the location 10, 20 and the acoustic resonator is small may improve the sensitivity of the sensor device 200, 300.

In the following, further details will be provided concerning the excitation of the mechanical oscillations in the acoustic resonator.

The acoustic resonator is configured to receive the acoustic signal propagating from the location 10, 20 to the acoustic resonator. The acoustic resonator is further configured to oscillate in response to the received acoustic signal. In other terms, mechanical oscillations are excited in the acoustic resonator when the acoustic signal reaches and couples to the acoustic resonator. The higher the intensity of the acoustic signal coupled with the acoustic resonator, the higher the intensity of the mechanical oscillations excited in the acoustic resonator as a result of the photo-acoustic response.

The acoustic signal coupled to the acoustic resonator may have a frequency spectrum with multiple frequency components. The acoustic resonator has a frequency response, which quantifies how the acoustic resonator oscillates in response to a certain frequency component of the acoustic signal coupled to the acoustic resonator. In other terms, the frequency response of the acoustic resonator quantifies how sensitive the acoustic resonator is to the acoustic signal produced by the photo-acoustic response and coupled to the acoustic resonator.

The acoustic resonator has a resonance frequency, i.e. the frequency at which the amplitude of the mechanical oscillations excited in the acoustic resonator is maximum. In other terms, a frequency component of the acoustic signal coupled to the acoustic resonator and being at the resonance frequency excites mechanical oscillations with an amplitude larger than the amplitude of the mechanical oscillations that would be excited by any other frequency component. Thus, when the acoustic signal coupled to the acoustic resonator has a single frequency component, the acoustic resonator is most sensitive to the photo-acoustic response if the frequency component is at the resonance frequency.

The acoustic resonator has a bandwidth, i.e. a range of frequencies over which the amplitude of the mechanical oscillations is within a percentage of the amplitude obtained at the resonance frequency. For instance, the bandwidth may be defined in relation to the percentage be ing50%, in which case the bandwidth is a so-called full width at half maximum (FWHM). However, the bandwidth being defined in relation to other percentages is also conceivable. Thus, when the acoustic signal coupled to the acoustic resonator has a frequency spectrum with multiple frequency components, the larger the fraction of the frequency spectrum is within the bandwidth of the acoustic resonator, the more sensitive the acoustic resonator is to the photo-acoustic response.

As already mentioned, when the excitation light signal is temporally modulated at a modulation frequency, the acoustic signal generated as a result of the photo-acoustic effect may have a major frequency component at the modulation frequency. When the frequency spectrum of the acoustic signal contains additional frequency components, these additional frequency components are concentrated around the major frequency component within a frequency range the extent of which is much smaller than a value of the major frequency component itself. Therefore, a temporal modulation of the excitation light signal at a modulation frequency equal to the resonance frequency may improve the sensitivity of the sensor device 200, 300.

The acoustic resonator has a quality factor. The quality factor is a measure of how frequency specific the frequency response of the acoustic resonator is. The quality factor may be defined as the ratio between the resonance frequency of the acoustic resonator and the bandwidth of the acoustic resonator. The larger the quality factor is, the narrower the bandwidth of the acoustic resonator is. In other terms, frequency components of the acoustic signal coupled to the acoustic resonator and sufficiently far from the resonance frequency are strongly attenuated, i.e. they do not effectively excite any mechanical oscillations. As a result, increasing the quality factor of the acoustic resonator may make the sensor device 200, 300 more frequency specific.

The acoustic resonator and the sample have a respective acoustic impedance. The acoustic impedance of a medium is a measure of the resistance of the medium to the propagation of acoustic signals through the medium. The coupling of the acoustic signal to the acoustic resonator is influenced by the acoustic impedance of the sample and by the acoustic impedance of the acoustic resonator. When the acoustic impedance of the sample and acoustic impedance of the acoustic resonator are not matched, at least a portion of the acoustic signal reaching the acoustic resonator is not coupled to the acoustic resonator, but instead reflected back to the sample. An efficient coupling of the acoustic signal from the sample to the acoustic resonator may improve the sensitivity of the sensor device 200, 300. Thus, matching the acoustic impedance of the sample with the acoustic impedance of the acoustic resonator may improve the sensitivity of the sensor device 200, 300.

It is understood that the acoustic impedance of the sample and the acoustic impedance of the acoustic resonator may depend on frequency. Thus, matching the acoustic impedance of the sample with the acoustic impedance of the acoustic resonator around the resonance frequency of the acoustic resonator may improve the sensitivity of the sensor device 200, 300.

It should be realized that the acoustic resonator has multiple vibration modes. As a result of the photo-acoustic response, at least one of these vibration modes are excited. For instance, the fundamental vibration mode may be excited.

It should be realized that an optical waveguide is a physical structure configured to guide a light signal, i.e. an electromagnetic wave in the optical spectrum.

An optical waveguide comprises a core region, where a major fraction of the optical energy of the light signal being guided is focused, and a cladding region, where the remaining fraction is. An optical waveguide may be a dielectric waveguide. In a dielectric waveguide, the core region and the cladding region are made of dielectric materials. The core region may have a higher refractive index as compared to the cladding region. In such a case, light is guided by total internal reflection.

In the embodiments in Fig. 3a and Fig. 3b, the first arm 212, 312 is a dielectric waveguide wherein the core region has a higher refractive index than the cladding region. Likewise, the second arm 214, 314 is a dielectric waveguide wherein the core region with a higher refractive index than the cladding region.

However, other types of dielectric waveguides are also conceivable, such as photonic crystal waveguides or slot waveguides. Moreover, optical waveguides comprising metals and dielectrics are also feasible, such as surface plasmon polariton waveguides.

It should be realized that the first arm 212, 312 and second arm 214, 314 may be configured for the first portion of the input light signal and second portion of the input light signal to be electromagnetically coupled. In such a case, the first portion of the input light signal and second portion of the input light signal do not propagate independently of each other, but rather form a joint optical mode collectively guided by the first arm 212, 312 and second arm 214, 314. This joint optical mode has an effective refractive index which depends on both the first arm 212, 312 and second arm 214, 314.

The strength of the electromagnetic coupling between the first portion of the input light signal and second portion of the input light signal depends on various contributions. For instance, by reducing the distance between the first arm 212, 312 and second arm 214, 314 the coupling strength is increased. Increasing the coupling strength may enhance the oscillation-induced variation of the output light signal relative to the input light signal. Thus, increasing the coupling strength of the first portion of the input light signal and second portion of the input light signal may improve the sensitivity of the sensor device 200, 300.

Referring now to Fig. 3a, the first embodiment will be described more closely.

As shown in Fig. 3a, the first mechanical structure 230 and the second mechanical structure 240 are formed as prongs of a tuning fork.

Thus, the tuning fork is the acoustic resonator. The resonance frequency is determined by various contributions, such as the shape, length, thickness, mass and stiffness of the first mechanical structure 230 and second mechanical structure 240.

The first arm 212 comprises a first mirror 216. The first mirror 216 is arranged at an end of the first arm 212 for reflecting the first portion of the input light signal. The first mirror 216 may be a Bragg mirror.

The second arm 214 comprises a second mirror 218. The second mirror 218 is arranged at an end of the second arm 214 for reflecting the second portion of the sensor light signal. The second mirror 218 may be a Bragg mirror.

The sensor waveguide 210 further comprises a base portion 220 connected to the first arm 212 and the second arm 214 at a junction point 222. The junction point 222 is where the first end 232 of the first mechanical structure 230 and the first end 242 of the second mechanical structure 240 join to each other.

The sensor waveguide 210 is configured to propagate the input light signal in a first propagation direction in the base portion 220 towards the junction point 222. At the junction point 222, the input light signal is split into the first portion of the input light signal and second portion of the input light signal.

The first portion of the input light signal propagates through the first arm 212 in a first arm forward propagation direction until it reaches the first mirror 216. At the first mirror 216, the first portion of the input light signal is, at least partly, reflected back into the first arm 212. The reflected portion of the first portion of the input light signal is hereinafter referred to as reflected first portion. The reflected first portion propagates back through the first arm 212 in a first arm backward propagation direction opposite to the first arm forward propagation direction.

Likewise, the second portion of the input light signal propagates through the second arm 214 in a second arm forward propagation direction until it reaches the second mirror 218. At the second mirror 218, the second portion of the input light signal is, at least partly, reflected back into the second arm 214. The reflected portion of the second portion of the input light signal is hereinafter referred to as reflected second portion. The reflected second portion propagates back through the second arm 214 in a second arm backward propagation direction opposite to the second arm forward propagation direction.

At the junction point 222, the reflected first portion and reflected second portion are recombined, thereby forming the output light signal. The output light signal propagates back through the base portion 220 in a second propagation direction opposite to the first propagation direction.

The sensor waveguide 210 may be designed to have a first input coupling ratio and a second input coupling ratio.

The first input coupling ratio is the ratio between the optical power of the first portion of the input light signal and the optical power of the input light signal in the ideal scenario that the optical power of the input light signal were equal to the sum of the optical power of the first portion of the input light signal and the optical power of the second portion of the input light signal.

Likewise, the second input coupling ratio is the ratio between the optical power of the second portion of the input light signal and the optical power of the input light signal in the ideal scenario that the optical power of the input light signal were equal to the sum of the optical power of the first portion of the input light signal and the optical power of the second portion of the input light signal.

For instance, the first input coupling ratio may be 50%, and the second input coupling ratio may be 50%.

However, it should be emphasized that, irrespective of the state of the acoustic resonator, the sum of the optical power of the first portion of the input light signal and the optical power of the second portion of the input light signal is, in practice, smaller than the optical power of the input light signal, due to optical power losses which inevitably occur upon splitting of the input light signal.

The first mechanical structure 230 may advantageously be mechanically balanced in relation to the second mechanical structure 140. This may imply that the first and second mechanical structures 130, 140 may filter out acoustic signals from a location external to the first and second mechanical structures 230, 240 and may only be sensitive to acoustic signals originating from the location between the first mechanical structure 230 and the second mechanical structure 240.

However, according to another embodiment, the first mechanical structure 230 may be mechanically unbalanced in relation to the second mechanical structure 240.

It should be realized that first mechanical structure 230 and the second mechanical structure 240 are mechanically unbalanced if they respond differently one from the other to the same excitation, i.e. to an excitation having the same strength, frequency, phase and direction. For instance, the first mechanical structure 230 and second mechanical structure 240 are mechanically unbalanced when they have different shape, length, thickness, mass or stiffness.

By unbalancing the first mechanical structure 230 and second mechanical structure 240, the frequency response of the acoustic resonator may be tuned so as to increase the sensitivity of the acoustic resonator to specific frequency components of the acoustic signal. Thus, at least one of the sensitivity and frequency specificity of the sensor device 200, 300 may be improved.

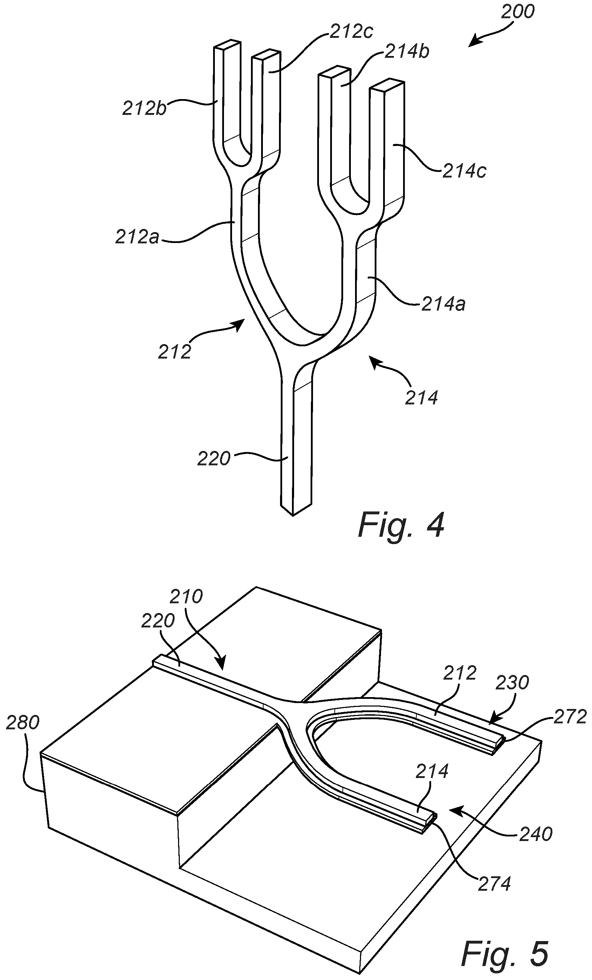

Fig. 4 illustrates an embodiment similar to that in Fig. 3a. The difference is that each prong of the tuning fork, in the embodiment in Fig. 4, is further arranged in a respective tuning fork, as further illustrated below.

In the embodiment in Fig. 4, the first arm 212 does not comprise the first mirror 216. Instead, the first arm 212 comprises a first arm base portion 212a, a first branch 212b of the first arm 212 and a second branch 212c of the first arm 212.

The first branch 212b and the second branch 212c are connected to the first arm base portion 212a at a junction point similar to the junction point 222 in Fig. 3a.

In other terms, the first branch 212b and the second branch 212c are arranged as prongs of a tuning fork, in the embodiment in Fig. 4, similarly to the first arm 212 and second arm 214 in the embodiment in Fig. 3a. In the embodiment in Fig. 4, each of the first branch 212b and the second branch 212c serves as a respective optical waveguide for further splitting and propagating the first portion of the input light signal. A respective mirror, such as a Bragg mirror, is arranged at a respective end of each of the first branch 212b and the second branch 212c.

Likewise, in the embodiment in Fig. 4 the second arm 214 does not comprise the second mirror 218. Instead, the second arm 214 comprises a second arm base portion 214a, a first branch 214b of the second arm 214 and a second branch 214c of the second arm 214.

The first branch 214b and the second branch 214c are connected to the second arm base portion 214a at a junction point similar to the junction point 222 in Fig. 3a.

In other terms, the first branch 214b and the second branch 214c are arranged as prongs of a tuning fork, in the embodiment in Fig. 4, similarly to the first arm 212 and second arm 214 in the embodiment in Fig. 3a. In the embodiment in Fig. 4, each of the first branch 214b and the second branch 214c serves as a respective optical waveguide for further splitting and propagating the second portion of the input light signal. A respective mirror, such as a Bragg mirror, is arranged at a respective end of each of the first branch 214b and the second branch 214c.

By arranging each prong of a tuning fork in a respective tuning fork, at least one of the sensitivity and frequency specificity of the sensor device 200 may be improved.

Referring now to Fig. 3b, the second embodiment will be described more closely.

As shown in Fig. 3b, the first end 332 of the first mechanical structure 330 and the first end 342 of the second mechanical structure 340 are connected at a first connection point 322. The second end 334 of the first mechanical structure 330 and the second end 344 of the second mechanical structure 340 are connected at a second connection point 324.

The first mechanical structure 330 is separate from the second mechanical structure 340 between the first connection point 322 and the second connection point 324.

As shown in Fig. 3b, the first arm 312 and the second arm 314 comprise a respective straight portion. The first arm 312 comprises a first curved portion, connecting the first end 332 with the straight portion of the first arm 312, and a second curved portion, connecting the second end 334 with the straight portion of the first arm 312. Likewise, the second arm 314 comprises a first curved portion, connecting the first end 342 with the straight portion of the second arm 314, and a second curved portion, connecting the second end 344 with the straight portion of the second arm 314. Thus, the first mechanical structure 330 and second mechanical structure 340 are arranged to together form a closed structure.

The first arm 312 has a length measured from the first end 332 to the second end 334 along a path defined by the first curved portion of the first arm 312, the straight portion of the first arm 312 and the second curved portion of the first arm 312.

Likewise, the second arm 314 has a length measured from the first end 342 to the second end 344 along a path defined by the first curved portion of the second arm 314, the straight portion of the second arm 314 and the second curved portion of the second arm 314.

The resonance frequency is determined by various contributions, such as the shape, length, thickness, mass and stiffness of the first mechanical structure 330 and the second mechanical structure 340.

The sensor waveguide 310 further comprises a base portion 320 connected to the first arm 312 and to the second arm 314 at the first connection point 322. The sensor waveguide 310 is configured to propagate the input light signal in the base portion 320 towards the connection point 322. At the connection point 322, the input light signal is split into the first portion of the input light signal and the second portion of the input light signal.

The sensor waveguide 310 further comprises a sensor portion 326 connected to the first arm 312 and to the second arm 314 at the second connection point 324. At the second connection point 324, the first portion of the input light signal and the second portion of the input light signal are recombined, thereby forming the output light signal. The output light signal propagates in the sensor portion 326 away from the second connection point 326.

Similarly to the sensor waveguide 210, the sensor waveguide 310 may be designed to have a first input coupling ratio and a second input coupling ratio, defined in the same manner.

For instance, the first input coupling ratio may be 50%, and the second input coupling ratio may be 50%.

The sensor waveguide 310 may be designed to have a first output coupling ratio and a second output coupling ratio.

However, it should be emphasized that, irrespective of the state of the acoustic resonator, the sum of the optical power of the first portion of the input light signal and the optical power of the second portion of the input light signal is, in practice, larger than the optical power of the output light signal, due to optical power losses which inevitably occur upon recombination of the first portion of the input light signal and second portion of the input light signal.

The first mechanical structure 330 may be mechanically unbalanced in relation to the second mechanical structure 340.

It should be realized that first mechanical structure 330 and the second mechanical structure 340 are mechanically unbalanced if they respond differently one from the other to the same excitation, i.e. to an excitation having the same strength, frequency, phase and direction. For instance, the first mechanical structure 330 and the second mechanical structure 340 are mechanically unbalanced when they have different shape, length, thickness, mass or stiffness.

By unbalancing the first mechanical structure 330 and the second mechanical structure 340, the frequency response of the acoustic resonator may be tuned so as to increase the sensitivity of the acoustic resonator to specific frequency components of the acoustic signal. Thus, at least one of the sensitivity and frequency specificity of the sensor device 200, 300 may be improved.

As already mentioned, in the absence of the photo-acoustic response and any other external force that may affect the first mechanical structure 330 and the second mechanical structure 340, the acoustic resonator is in the idle state. In the idle state, no mechanical oscillations are excited as a result of the photo-acoustic response or any other external force.

As illustrated in Fig. 3c, the sensor device 300 may be configured such that, in the idle state, an optical path length of the first arm 312 is different from an optical path length of the second arm 314. In other words, the first arm 312 and the second arm 314 may be optically unbalanced.

The optical unbalance illustrated in Fig. 3c ensures that a mechanical stimulation of the acoustic signal, even if symmetrical, will provide different impact on the paths of the first arm 312 and the second arm 314, respectively.

It should be realized that a difference in the optical path length of the first arm 312 as compared to the optical path length of the second arm 314 may be due to a difference in the geometry or refractive index of the first arm 312 relative to the second arm 314, or to any other factor that would change the phase shift per unit length of the first portion of the input light signal propagating in the first arm 312 relative to the phase shift per unit length of the second portion of the input light signal propagating in the second arm 314.

For instance, the length of the first arm 312 may differ from the length of the second arm 314 by one fourth of the wavelength of the input light signal. This difference leads to a phase shift equal to π/2 between the first portion of the input light signal and the second portion of the input light signal when the first portion of the input light signal recombines with the second portion of the input light signal, as long as certain conditions are fulfilled. These conditions are that the phase shift per unit length of the input light signal is the same as the phase shift per unit length of first portion of the input light signal, and the same as the phase shift per unit length of second portion of the input light signal. These conditions may be fulfilled in the absence of nonlinear effects, such as self-phase modulation, four-wave mixing and others.

As already mentioned, the recombination loss originates from the destructive interference of the first portion of the input light signal and the second portion of the input light signal upon recombination of the first portion of the input light signal and the second portion of the input light signal. Therefore, by designing the optical unbalance, in the idle state, of the first arm 312 and second arm 314 in relation to each other, the recombination loss in the idle state may be tuned.

As already mentioned, in the perturbed state there exists an oscillation-induced variation of the recombination loss relative to the idle state. By tuning the recombination loss in the idle state, the oscillation-induced variation of the recombination loss, in the perturbed state relative to the idle state, may be increased. Thus, the sensitivity of the sensor device 300 may be improved.

In the following, the first mechanical structure 230, 330 and the second mechanical structure 240, 340 will be further described.

The first mechanical structure 230, 330 may comprise a first supporting structure. In such a case, the first arm 212, 312 of the sensor waveguide 210, 310 is arranged on the first supporting structure. The second mechanical structure 240, 340 may comprise a second supporting structure. In such a case, the second arm 214, 314 of the sensor waveguide 210, 310 is arranged on the second supporting structure.

The acoustic signal induced by the photo-acoustic response may couple, at least partially, with the first supporting structure and the second supporting structure. In such a case, mechanical oscillations are directly excited, at least partially, in the first supporting structure and second supporting structure. These mechanical oscillations may subsequently propagate to the first arm 212, 312 and second arm 214, 314.

It should be realized that mechanical oscillations may also be directly excited in the first arm 212, 312 and second arm 214, 314.

Fig. 5 shows an embodiment similar to that in Fig. 3a. As shown in Fig. 5, the first mechanical structure 230 and the second mechanical structure 240 comprise, respectively, a first supporting structure 272 and a second supporting structure 274.

The supporting structure 272 is a layer supporting the first arm 212. Thus, the first arm 212 may be arranged on a structure that may have a similar shape to the first arm 212. The first mechanical structure 230 may thus be formed by the first supporting structure 272 and the first arm 212. The second supporting structure 274 is a layer supporting the second arm 214. Thus, the second arm 214 may be arranged on a structure that may have a similar shape to the second arm 214. The second mechanical structure 240 may thus be formed by the second supporting structure 274 and the second arm 214.

The first supporting structure 272 and the second supporting structure 274 may be formed in a supporting layer extending in a plane parallel with a waveguide layer in which the sensor waveguide 210 is arranged. The supporting layer providing the first supporting structure 272 and the second supporting structure 274 may be arranged below the waveguide layer.

The supporting layer may be supported by a substrate 280. However, in an area of the supporting layer in which the first supporting structure 272 and the second supporting structure 274 is formed, a cavity may be provided. Thus, the first supporting structure 272 and the second supporting structure 274 may not be supported in the area allowing the first mechanical structure 230 and the second mechanical structure 240 to be free to oscillate mechanically.

In the embodiment in Fig. 5, the first mechanical structure 230 and the second mechanical structure 240 is supported only at the first ends.

However, it should be realized that a similar arrangement may be provided in relation to the embodiment in Fig. 3b. In this alternative embodiment, the first mechanical structure 330 and the second mechanical structure 340 comprise, respectively, a first supporting structure and a second supporting structure. Thus, the first arm 312 may be arranged on the first supporting structure and the second arm 314 may be arranged on the second supporting structure. The first mechanical structure 330 may thus be formed by the first supporting structure and the first arm 312 and the second mechanical structure 340 may be formed by the second supporting structure and the second arm 314.

The first supporting structure and the second supporting structure may be formed in a layer which is not supported between the first and the second ends of the first mechanical structure and the second mechanical structures, respectively, such that the first and second mechanical structures 330, 340 are configured to oscillate relative to the respective first and second ends as a result of the photo-acoustic response.

The first mechanical structure 230, 330 may, alternatively, not comprise the first supporting structure. In such a case, as shown in Fig. 3a and Fig. 3b, the first arm 212, 312 of the sensor waveguide 210, 310 forms the first mechanical structure 230, 330.

Likewise, the second mechanical structure 240, 340 may, alternatively, not comprise the second supporting structure. In such a case, as shown in Fig. 3a and Fig. 3b, the second arm 214, 314 of the sensor waveguide 210, 310 forms the second mechanical structure 240, 340.

In the embodiments in Fig. 3a and Fig. 3b, the sensor waveguide 210, 310 comprises a first supporting structure (not shown) configured to support the base portion 220, 320. In the embodiments in Fig. 3a and Fig. 3b, the base portion 220, 320 is arranged in the same plane as the first arm 212, 312 and the second arm 214, 314. The first supporting structure may be formed in a supporting layer extending parallel to a waveguide layer, as discussed above in relation to Fig. 5, providing support of the base portion 220, 320 of the sensor waveguide 210, 310. However, the layer in which the first supporting structure is arranged may be etched such that the first arm 212, 312 and the second arm 214, 314 are not supported by the supporting layer.

According to an alternative, the first supporting structure may be arranged perpendicularly to the plane where the base portion 220, 320, the first arm 212, 312 and the second arm 214, 314 are arranged. The first supporting structure is shaped in the form of a post, but alternative shapes are conceivable. Alternative arrangements of the first supporting structure are also conceivable.

In the embodiment in Fig. 3b, the sensor waveguide 310 comprises a second supporting structure (not shown) configured to support the sensor portion 326. In the embodiment in Fig. 3b, the sensor portion 326 is arranged in the same plane as the first arm 312 and the second arm 314. The second supporting structure may be formed in the supporting layer extending parallel to the waveguide layer providing support of the sensor portion 326 of the sensor waveguide 310.

According to an alternative, the second supporting structure may be arranged perpendicularly to the plane where the sensor portion 326, the first arm 312 and the second arm 314 are arranged. The second supporting structure is shaped in the form of a post, but alternative shapes are conceivable. Alternative arrangements of the second supporting structure are also conceivable.

The excitation light signal may be external to the sensor waveguide 210, 310, i.e., it may propagate separately from the sensor waveguide 210, 310.

In the embodiments in Fig. 3a and Fig. 3b, the excitation light signal is external. However, as further discussed later, the excitation light signal may, alternatively, be internal.

In any of the embodiments herein provided wherein the excitation light signal is external, the sensor device 200, 300 may further comprise an excitation waveguide. The excitation waveguide is configured to propagate the excitation light signal and to output the excitation light signal to the location 10, 20 between the first mechanical structure 230, 330 and the second mechanical structure 240, 340.

In these embodiments, the excitation waveguide and the sensor waveguide 210, 310 may be integrated with each other. In other terms, the sensor device 200, 300 may be formed, at least partly, as a photonic integrated circuit. Integrating the excitation waveguide and the sensor waveguide may reduce the total volume occupied by the sensor device 200, 300, thereby improving the miniaturization thereof.

The excitation waveguide may extend in a first plane and the sensor waveguide may extend in a second plane different from the first plane. In such a case, the excitation waveguide is configured to output the excitation light signal to traverse the second plane.

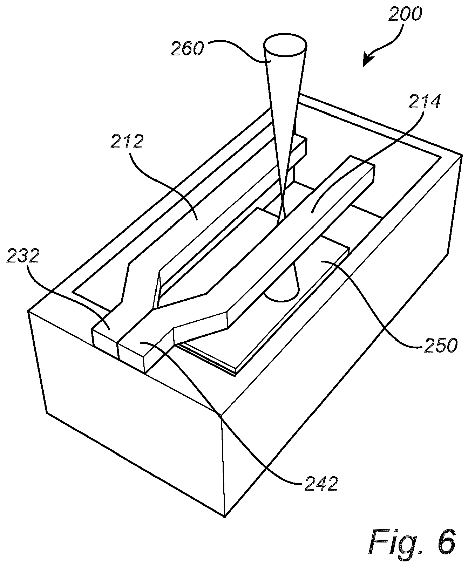

In the embodiment shown in Fig. 6, the sensor device 200 comprises the excitation waveguide 250. The sensor waveguide 210 and the excitation waveguide 250 are integrated with each other. The excitation waveguide 250 extends in a first plane and the sensor waveguide 210 extends in a second plane different from the first plane. The location 10, where the sample to be probed is placed, is arranged, at least partially, in the second plane. The excitation waveguide 250 comprise a coupler configured to couple the excitation light signal 260 from the excitation waveguide 250, in the first plane, to the location 10. In Fig. 6, the coupler is a grating coupler, but, alternatively, another type of coupler, such as a prism coupler, may be used.

Alternative coupling schemes are also conceivable for the excitation waveguide 250 to output the excitation light signal 260. For instance, the excitation waveguide 250 may, alternatively, not comprise a coupler. In such a case, the excitation light signal 260 may be coupled evanescently from the excitation waveguide 250 to the location 10.

Some embodiments are provided wherein the excitation light signal is internal. These embodiments (not shown) are similar to those in Fig. 3a and Fig. 3b and will be further described in the following.

In these embodiments, the excitation light signal is internal, i.e., the excitation light signal propagates from the light-emitting device to the location 10, 20 being guided by the sensor waveguide 210, 310.

Thus, no excitation waveguide is separately provided. Instead, the sensor waveguide 210, 310 is configured to propagate both the input light signal and the excitation light signal. Similarly to the input light signal, the excitation light signal is split into a first portion, propagating in the first arm 212, 312, and a second portion, propagating in the second arm 214, 314.

In these embodiments, the wavelength of the input light signal is chosen to be different from the wavelength of the excitation light signal. Thus, interference between the excitation light signal and the input light signal is avoided while they propagate in the sensor waveguide 210, 310.

In these embodiments, the excitation light signal is configured to cause the photo-acoustic response in the location 10, 20 between the first mechanical structure 230, 330 and the second mechanical structure 240, 340 by the electromagnetic field of the excitation light signal.

In these embodiments, while propagating in the first arm 212, 312, the first portion of the excitation light signal and second portion of the excitation light signal partly interact with the sample. Thus, part of the optical energy of the first portion of the excitation light signal and second portion of the excitation light signal is absorbed by the sample and induces the photo-acoustic response.

In these embodiments, each of the first arm 212, 312 and second arm 214, 314 is a dielectric waveguide wherein the cladding region has a lower refractive index than the core region. The sample is arranged such that it overlaps, at least partially, with the cladding region. Thus, the fraction of optical energy of the first portion of the excitation light signal and second portion of the excitation light signal being in the respective cladding region may be absorbed, at least partially, by the sample and induce the photo-acoustic response.

However, other types of optical waveguides, such as photonic crystal waveguides, slot waveguides or surface plasmon polariton waveguides, may, alternatively, be used provided that the sensor waveguide is configured to enable interaction of the sample with the first portion of the input light signal and second portion of the input light signal.

It should be realized that the photo-acoustic response should preferably be induced by the excitation light signal alone in order to avoid noise on the output light signal. Thus, preferably, the wavelength of the input light signal is chosen based on the optical properties of the sample, such as the absorption coefficient, in order to minimize the strength of the photo-acoustic response that may be induced by the input light signal.

It should be realized that propagating both the input light signal and the excitation light signal in the sensor waveguide eliminates the need for a separately provided excitation waveguide. Thus, the total volume occupied by the sensor device 200, 300 may be reduced, thereby improving the miniaturization thereof.

The output light signal may be configured to carry information representing the photo-acoustic response by a modulation in amplitude or phase of the output light signal.

Such information may be extracted by processing of the output light signal in the optical domain directly. Alternatively, information representing the photo-acoustic response may be extracted by transducing the output light signal into an electrical signal, hereinafter referred to as output electrical signal.

In the perturbed state, a modulation in amplitude of the output light signal implies that the optical power of the output light signal is modulated. Thus, the output electrical signal may be an electrical current produced as an output by a photodetector to which the output light signal is fed. The output electrical signal may be fed to a lock-in amplifier, as further discussed later.

By signal processing of the output electrical signal, the information carried by the modulation in amplitude of the output light signal may be extracted.

In the perturbed state, alternatively, information representing the photo-acoustic response may be carried by a modulation of the phase of the output light signal. In such a case, coherent detection techniques, such as homodyne detection or heterodyne detection, may be utilized to demodulate the output light signal. In such a case, the output electrical signal may be an electrical current produced as an output by a photodetector to which a mixing of the output light signal with a local oscillator light signal is fed.

By signal processing of the output electrical signal, the information carried by the modulation in phase of the output light signal may be extracted.

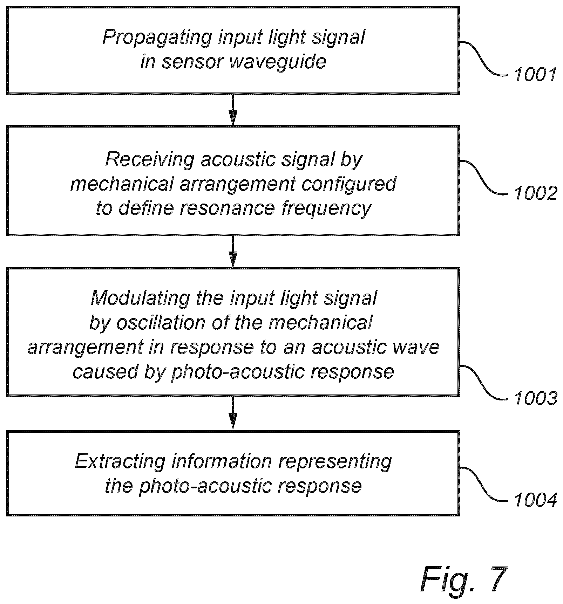

Fig. 7 illustrates a method for detection of a photo-acoustic response to an excitation light signal.

The method comprises propagating 1001 an input light signal in a sensor waveguide.

In embodiments, the method may comprise splitting the input light signal into a first portion of the input light signal, propagating in a first arm of the sensor waveguide, and a second portion of the input light signal, propagating in a second arm of the sensor waveguide.

As illustrated by embodiments herein provided, the first arm and the second arm of the sensor waveguide may be configured in a first mechanical structure and a second mechanical structure, respectively. Each mechanical structure is supported only at a first end and at a second end of the respective mechanical structure. Alternatively, each mechanical structure is supported only at a first end of the respective mechanical structure.

As illustrated by embodiments herein provided, the mechanical arrangement defines a resonance frequency of mechanical oscillations, for instance a resonance frequency of the first mechanical structure and the second mechanical structure. The mechanical arrangement may be sensitive to the photo-acoustic response, e.g., in a location between the first mechanical structure and the second mechanical structure, causing an acoustic signal having a frequency corresponding to the resonance frequency. The mechanical arrangement may be configured to oscillate in response to the acoustic signal for affecting an output light signal.

Thus, the method further comprises receiving 1002 an acoustic signal by a mechanical arrangement configured to define a resonance frequency of mechanical oscillations. The frequency of the acoustic signal corresponds to the resonance frequency of the mechanical arrangement.

The method further comprises modulating 1003 the input light signal by oscillation of the mechanical arrangement in response to the acoustic signal. For instance, the method may comprise modulating a first portion of the input light signal in the first arm and the second portion of the input light signal in the second arm by oscillation of the first mechanical structure and the second mechanical structure.

The method may further comprise re-combining the first portion of the input light signal and the second portion of the input light signal into the output light signal. The output light signal carries information representing the photo-acoustic response.

The method may further comprise extracting 1004 information representing the photo-acoustic response from a modulation in amplitude of the output light signal and/or from a modulation in phase of the output light signal.

In the following, the use of a lock-in amplifier for extracting information representing the photo-acoustic response from a modulation in amplitude of the output light signal will be discussed in more detail. This approach is particularly useful when the excitation light signal is temporally modulated in amplitude at a modulation frequency, which is the situation considered in the remaining part of this discussion about the use of a lock-in amplifier.

In the following, the output electrical signal is an electrical current produced as an output by a photodetector to which the output light signal is fed. As already mentioned, the mechanical oscillations in the perturbed state induce a variation, as compared to the idle state, of the optical power drop of the output light signal relative to the input light signal. Thus, the output electrical signal is modulated in amplitude. The output electrical signal has a frequency spectrum concentrated around the resonance frequency of the acoustic resonator.

The lock-in amplifier may be configured to receive as an input the output electrical signal and a reference electrical signal. In such a case, the reference signal is a sinusoidal electrical signal with a frequency equal to the modulation frequency. The lock-in amplifier is configured to produce an output amplifier signal by mixing the output electrical signal with the reference electrical signal and subsequently applying low-pass filtering. When the modulation frequency corresponds to the resonance frequency of the acoustic resonator, the output amplifier signal is proportional to the amplitude of the frequency component of the output electrical signal at the resonance frequency of the acoustic resonator.

It should be realized that the output electrical signal may contain frequency components due to noise, i.e. unwanted or random fluctuations in the output electrical signal that can obscure or distort the information representing the photo-acoustic response. The lock-in amplifier is configured to filter out the noise frequency components at frequencies other than the modulation frequency, which improves the signal-to-noise ratio of the output amplifier signal. Thus, the sensitivity of the method for detecting the photo-acoustic response may be improved.

In the above the inventive concept has mainly been described with reference to a limited number of examples. However, as is readily appreciated by a person skilled in the art, other examples than the ones disclosed above are equally possible within the scope of the inventive concept, as defined by the appended claims.

For instance, although the embodiments above have been mainly described in relation to detection of an acoustic signal being formed by a photo-acoustic response, it should be realized that another acoustic signal may be detected. In such case, no excitation light signal may be needed and no structure for propagating the excitation light signal may be needed.

It should further be realized that the sensor waveguide and a mechanical arrangement may be provided in different manners. For instance, the mechanical arrangement may have a first mechanical structure and a second mechanical structure as described in embodiments above, but may not necessarily have two separate mechanical structures.

The sensor waveguide may have separate portions in the first and second mechanical structures as described above. However, the input light signal may be fed only directly into a waveguide portion in one of the first or the second mechanical structure. The input light signal may then be evanescently coupled into the waveguide portion in the other mechanical structure.

The sensor device may then be configured to measure a power split between the two waveguide portions for detecting the acoustic signal.

## Claims

1. A sensor device (100; 200; 300) for detection of an acoustic signal, said sensor device comprising:
a mechanical arrangement (102; 202; 302) configured to define a resonance frequency of mechanical oscillations, wherein the mechanical arrangement (102) is configured to oscillate in response to the acoustic signal having a frequency corresponding to the resonance frequency; and
a sensor waveguide (110; 210; 310) configured to propagate a sensor light signal for detecting the acoustic signal, wherein the sensor waveguide (110; 210; 310) is arranged in relation to the mechanical arrangement (102; 202; 302), wherein light propagation of the sensor waveguide (110; 210; 310) is configured to be modulated by the mechanical oscillations of the mechanical arrangement (102; 202; 302) for affecting the sensor light signal for detection of the acoustic signal.

2. The sensor device according to claim 1, wherein the sensor waveguide (110; 210; 310) is arranged in or integrated with the mechanical arrangement (102; 202; 302).

3. The sensor device according to claim 1 or 2, wherein the mechanical arrangement (202; 302) is sensitive to the acoustic signal in a selective spatial location (10; 20) in relation to the mechanical arrangement.

4. The sensor device according to claim 3, wherein the sensor device (100; 200; 300) is configured to detect the acoustic signal being a photo-acoustic response to excitation light occurring in the spatial location causing the acoustic signal having the frequency corresponding to the resonance frequency.

5. The sensor device according to claim 4, wherein the sensor waveguide (210; 310) comprises a first arm (212; 312) and a second arm (214; 314) separate from the first arm (212; 312), wherein the sensor waveguide (210; 310) is configured to split the sensor light signal for propagating a first portion of the sensor light signal in the first arm (212; 312) and for propagating a second portion of the sensor light signal in the second arm (214; 314), wherein the sensor waveguide (210; 310) is configured to re-combine the first portion of the sensor light signal and the second portion of the sensor light signal into a re-combined sensor light signal carrying information representing the photo-acoustic response;
wherein the mechanical arrangement (202; 302) comprises a first mechanical structure (230; 330) and a second mechanical structure (240; 340) and wherein the first arm (212; 312) and the second arm (214; 314) of the sensor waveguide (210; 310) are configured in the first mechanical structure (230; 330) and the second mechanical structure (240; 340), respectively, wherein each mechanical structure (230, 240; 330; 340) is supported only at a first end (232, 242) or at the first end (332, 342) and at a second end (334, 344) of the respective mechanical structure (230, 240; 330, 340), wherein the first mechanical structure (230; 330) and the second mechanical structure (240; 340) define a resonance frequency of mechanical oscillations of the first mechanical structure (230; 330) and the second mechanical structure (240; 340), wherein the first mechanical structure (230; 330) and the second mechanical structure (240; 340) are sensitive to the acoustic signal in a spatial location (10; 20) being between the first mechanical structure (230; 330) and the second mechanical structure (240; 340), wherein the first mechanical structure (230; 330) and the second mechanical structure (240; 340) are configured to oscillate in response to the acoustic signal for affecting the re-combined sensor light.

6. The sensor device according to claim 5, wherein the first mechanical structure (230) and the second mechanical structure (240) are formed as prongs of a tuning fork.

7. The sensor device according to claim 6, wherein a first mirror (216) is arranged at an end of the first arm (212) for reflecting the first portion of the sensor light signal and a second mirror (218) is arranged at an end of the second arm (214) for reflecting the second portion of the sensor light signal, and wherein the sensor waveguide (210) further comprises a base portion (220) connected to the first arm (212) and the second arm (214) at a junction point (222), wherein the sensor waveguide (210) is configured to propagate the sensor light signal in a first direction in the base portion (220) towards the junction point (222) for splitting the sensor light signal in the junction point (222) into the first portion of the sensor light signal and the second portion of the sensor light signal, wherein the sensor waveguide (210) is further configured to receive a reflected first portion of the sensor light signal and a reflected second portion of the sensor light signal at the junction point (222) for forming the re-combined sensor light signal at the junction point (222) and propagating the re-combined sensor light signal in a second direction in the base portion (220) away from the junction point (222).

8. The sensor device according to claim 5, wherein a first end (332) of the first mechanical structure (330) and a first end (342) of the second mechanical structure (340) are connected at a first connection point (322) and wherein a second end (334) of the first mechanical structure (330) and a second end (344) of the second mechanical structure (340) are connected at a second connection point (324), wherein the first mechanical structure (330) is separate from the second mechanical structure (340) between the first connection point (322) and the second connection point (324).

9. The sensor device according to claim 8, wherein the sensor waveguide (310) further comprises a base portion (320) connected to the first arm (312) and the second arm (314) at the first connection point (322), wherein the sensor waveguide (310) is configured to propagate the sensor light signal in the base portion (320) towards the connection point (322) for splitting the sensor light signal in the connection point (322) into the first portion of the sensor light signal and the second portion of the sensor light signal, wherein the sensor waveguide (310) further comprises a sensor portion (326) connected to the first arm (312) and the second arm (314) at the second connection point (324), wherein the sensor portion (326) is configured to receive the first portion of the sensor light signal and the second portion of the sensor light signal at the second connection point (324) for forming the re-combined sensor light signal at the second connection point (324) and propagating the re-combined sensor light signal in the sensor portion (326) away from the second connection point (324).

10. The sensor device according to claim 8 or 9, wherein the first mechanical structure (330) is mechanically unbalanced in relation to the second mechanical structure (340).

11. The sensor device according to any one of claims 8-10, wherein, in a configuration when the first mechanical structure (330) and the second mechanical structure (340) are unaffected by an external force, an optical path length of the first arm (312) is different from an optical path length of the second arm (314).

12. The sensor device according to any one of claims 4-11, further comprising an excitation waveguide (250) configured to propagate an excitation light signal and to output the excitation light signal to the spatial location.

13. The sensor device according to claim 12, wherein the excitation waveguide (250) and the sensor waveguide (210) are integrated with each other, wherein the excitation waveguide (250) extends in a first plane and the sensor waveguide (210) extends in a second plane different from the first plane, wherein the excitation waveguide (250) is configured to output the excitation light to traverse the second plane.

14. The sensor device according to any one of claims 4-11, wherein the sensor waveguide (110; 210) is configured to propagate the sensor light signal and an excitation light signal, wherein the excitation light signal has an excitation wavelength and the sensor light signal has a sensor wavelength different from the excitation wavelength, wherein the excitation light signal is configured to cause the photo-acoustic response in the spatial location (10; 20) by the electromagnetic field of the excitation light.

15. A method for detection of an acoustic signal, said method comprising:
receiving (1002) an acoustic signal by a mechanical arrangement configured to define a resonance frequency of mechanical oscillations, wherein a frequency of the acoustic signal corresponds to the resonance frequency of the mechanical arrangement;
propagating (1001) a sensor light signal in a sensor waveguide, wherein the sensor waveguide is configured in relation to the mechanical arrangement; and
modulating (1003) the sensor light signal by oscillation of the mechanical arrangement in response to the acoustic signal for affecting the sensor light signal for detection of the acoustic signal.
